# EUROPÄISCHE PATENTSCHRIFT

(11) **EP 4 107 095 B1**
(45) Veröffentlichungstag und Bekanntmachung des Hinweises auf die Patenterteilung: **08.01.2025**
(21) Anmeldenummer: 21703826.4
(22) Anmeldetag: 20.01.2021
(51) Int. Cl.: B65G 15/36, B65G 43/02, F16G 3/10

(54) **FÖRDERGURT MIT GURTVERBINDUNG**
CONVEYOR BELT HAVING BELT CONNECTION
BANDE TRANSPORTEUSE À LIAISON DE BANDE

(30) Priorität: 17.02.2020 DE 102020201906
(43) Veröffentlichungstag der Anmeldung: 28.12.2022
(73) Patentinhaber: ContiTech Deutschland GmbH, 30175 Hannover (DE)
(72) Erfinder: CERVERA, Daniel, 30165 Hannover (DE); RIEDEL, Wolfgang, 30165 Hannover (DE); POPPE, Jan, 30165 Hannover (DE)
(74) Vertreter: Continental Corporation
(86) Internationale Anmeldenummer: PCT/DE2021/200001
(87) Internationale Veröffentlichungsnummer: WO 2021/164828

(56) Entgegenhaltungen:
- EP-A2- 0 787 669
- WO-A1-2005/023688
- WO-A1-99/41567
- DE-A1- 102015 224 563
- US-A- 4 020 945
- US-A1- 2009 147 914
- US-A1- 2012 168 281
- US-A1- 2015 144 459

## Beschreibung

### Fördergurt mit Gurtverbindung

Die vorliegende Erfindung betrifft einen Fördergurt mit wenigstens einer Gurtverbindung gemäß dem Oberbegriff des Patentanspruchs 1.

Bei verschiedensten Anwendungen werden Fördergurte eingesetzt, um insbesondere Fördergüter zu transportieren. Derartige Fördergurte können auch als Transportgurte, als Förderbänder oder als Transportbänder bezeichnet werden. Als Fördergüter kommen insbesondere lose Güter wie z.B. Schüttgüter in Betracht. Die Fördergurte werden in der Bewegungsrichtung, welche auch als Förderrichtung oder als Laufrichtung bezeichnet werden kann, endlos geschlossen verwendet.

Derartige Fördergurte bestehen üblicherweise aus einem flexiblen Material und insbesondere aus einem elastomeren Material wie z.B. Gummi, in welches zur Übertragung der Zugkräfte in der Bewegungsrichtung sog. Zugträger eingebettet sind. Dies können je nach Art des Fördergurtes parallel zueinander verlaufende Stahlseile oder auch textile flächige Zugträger sein.

Bei der Endlosschließung von Fördergurten mit Stahlseilen werden die Stahlseile der beiden Enden des Fördergurtes oder der Fördergurtsegmente, welche miteinander zu verbinden sind, üblicherweise von dem flexiblen Material freigelegt und die Stahlseilenden miteinander verspleißt sowie anschließend erneut z.B. vulkanisiert. Hierdurch kann eine Gurtverbindung bzw. eine Verbindungsstelle ausgebildet werden, welche ausreichend stabil ist, um auch bei unterbrochenen Zugträgern die Zugkräfte in der Bewegungsrichtung zu übertragen. Der Fördergurt kann hierdurch endlos geschlossen bzw. zunächst verlängert und abschließend endlos geschlossen werden.

Auch wenn derartige Gurtverbindungen heutzutage einen sehr hohen technischen Stand aufweisen und entsprechend stabil, langlebig und verlässlich sind, stellen Gurtverbindungen dennoch eine mögliche Schwachstelle des Fördergurtes dar. Daher sind die Gurtverbindungen im Einsatz befindlicher Fördergurte in gewissen zeitlichen Abständen auf ihren Zustand zu kontrollieren. Dies kann durch eine optische Inspektion durch eine Person sowie ggfs. messtechnisch erfolgen. Werden bei der Inspektion Auffälligkeiten der Gurtverbindung festgestellt, so kann eine Instandsetzung erfolgen, sofern dies möglich ist. Ggfs. kann auch ein Austausch des Fördergurtes erforderlich sein. In jedem Fall ist es das Ziel, eine Schwächung der Gurtverbindung des Fördergurtes zu erkennen, bevor es zu einem Reißen des Fördergurtes an der Gurtverbindung kommt, was insbesondere zu Schäden der Fördergurtanlage, zu Umweltbelastungen, zu finanziellen Ausfällen, zu zusätzlichen Kosten und dergleichen führen kann.

Zusätzlich können bei einer optischen Inspektion der Gurtverbindung eines Fördergurtes Erkenntnisse über die Güte der Ausrichtung des Fördergurtes in der Fördergurtanlage gewonnen werden. Weist nämlich die Gurtverbindung seitlich in der Querrichtung eine angelaufene und ggfs. mechanisch beschädigte Fördergurtkante auf, was aus einem ungewünschten seitlichen Kontakt der Fördergurtes mit Elementen der Fördergurtanlage resultieren kann, so kann hierdurch auf eine schlechte Führung des Fördergurtes in der Fördergurtanlage geschlossen werden. Dann kann die Ausrichtung des Fördergurtes in der Fördergurtanlage korrigiert werden, um derartige seitliche Kontakte zukünftig möglichst zu vermeiden.

Zu beachten ist, dass in der Praxis das Auffinden einer Gurtverbindung eines Fördergurtes recht mühsam und sehr zeitaufwendig sein kann, da sich die Gurtverbindung z.B. bei Stahlseilfördergurten aus Gummi aufgrund der Vulkanisation der verbundenen Fördergurtenden bzw. Fördergurtsegmentenden üblicherweise optisch kaum von dem übrigen Fördergurt unterscheidet. Somit kann die inspizierende Person beim Ablaufen der Fördergurtanlage die zu inspizierende Gurtverbindung des Fördergurtes optisch nicht einfach, sicher und schnell erkennen.

Daher ist es üblich, dass die inspizierende Person den Fördergurt in der Fördergurtanlage anhand eines Gurtlaufplans, in welchem die Gurtverbindung verzeichnet ist bzw. in welchem die Gurtverbindungen verzeichnet sind, abläuft und durch Ausmessen entlang der Erstreckungsrichtung des Fördergurtes die Gurtverbindung bzw. Gurtverbindungen lokalisiert. Dies kann das Auffinden der Gurtverbindung bzw. der Gurtverbindungen erleichtern und beschleunigen, stellt jedoch einen zusätzlichen hohen Aufwand dar. Ferner kann eine Gurtverbindung auch bei theoretischer Kenntnis ihrer Lage entlang der Gurtförderanlage dennoch für die inspizierende Person nicht schnell und eindeutig optisch zu finden sein. Die WO 99/41567 A1 beschreibt eine Einrichtung zur kontinuierlichen Überwachung einer Verbindung eines Fördergurtes aus Gummi oder gummiähnlichem Kunststoff, der insbesondere mit eingebetteten Festigkeitsträgern versehen ist. Im Rahmen einer vorteilhaften Ausführungsform besteht die Einrichtung in Bezug auf den Verbindungsbereich u.a. aus folgenden Komponenten, nämlich aus vier Messmarken, zwei Adressen sowie aus vier Sensorköpfen, wobei die Sensorköpfe oberhalb der Tragseite des Fördergurtes angeordnet sind.

DE102015224563A1 offenbart einen Fördergurt gemäß dem Oberbegriff des Anspruchs 1.

Eine Aufgabe der vorliegenden Erfindung ist es, einen Fördergurt der eingangs beschriebenen Art bereit zu stellen, dessen Gurtverbindung bzw. Gurtverbindungen einfacher, schneller und bzw. oder verlässlicher als bisher bekannt aufgefunden werden kann bzw. können. Dies soll insbesondere für eine inspizierende Person ermöglicht werden. Zumindest soll eine Alternative zu bekannten derartigen Fördergurten geschaffen werden.

Die Aufgabe wird erfindungsgemäß durch einen Fördergurt mit den Merkmalen gemäß Patentanspruch 1 gelöst. Vorteilhafte Weiterbildungen sind in den Unteransprüchen beschrieben.

Somit betrifft die vorliegende Erfindung einen Fördergurt mit einem Fördergurtkörper, welcher mittels wenigstens einer Gurtverbindung endlos geschlossen ist. Der Fördergurtkörper besteht im Wesentlichen aus einem flexiblen und insbesondere aus einem elastomeren Material wie insbesondere aus Gummi. Vorzugweise sind Zugträger in der Längsrichtung im flexiblen Material eingebettet, wie weiter unten noch näher beschrieben werden wird. Als Zugträger können insbesondere Stahlseile verwendet werden.

Genau die Gurtverbindung weist wenigstens ein Markierungselement auf. Mit anderen Worten ist die Gurtverbindung bzw. der Bereich bzw. der Abschnitt der Gurtverbindung mittels einer Kennzeichnung markiert und als solche einfacher, schneller und bzw. oder zuverlässiger als bisher bekannt, insbesondere optisch für eine inspizierende Person, erkennbar bzw. vom übrigen Verlauf des Fördergurtes unterscheidbar.

Der vorliegenden Erfindung liegt die Erkenntnis zugrunde, dass - wie eingangs beschrieben - insbesondere bei Stahlseilfördergurten der Bereich einer Gurtverbindung optisch von einer inspizierenden Person schlecht zu finden sein kann. Daher wird erfindungsgemäß die Gurtverbindung mittels einer Markierung derart gekennzeichnet, dass sich die Gurtverbindung von dem übrigen Fördergurt entlang dessen länglicher Erstreckung unterscheidet. Mit anderen Worten wird der Bereich oder Abschnitt eines Fördergurtes, wo sich eine Gurtverbindung befindet, derart mittels des wenigstens einen Markierungselements gekennzeichnet, dass sich der Bereich oder Abschnitt der Gurtverbindung von dem übrigen Fördergurtkörper des Fördergurtes einfacher, schneller und bzw. oder zuverlässiger als bisher bekannt unterscheiden lässt.

Hierzu können jegliche Mittel verwendet werden, welche geeignet sind, diese Wirkung zu erzeugen. Insbesondere können dies optische und bzw. oder elektronische Markierungselemente sein, wie weiter unten näher beschrieben werden wird. Jedoch können auch andere Mittel wie z.B. magnetische Markierungselemente hierzu verwendet werden.

Auf diese Art und Weise kann es einer inspizierenden Person erleichtert werden, eine zu inspizierende Gurtverbindung zu finden. Dies kann den Aufwand und insbesondere den zeitlichen Aufwand für die inspizierende Person reduzieren und hierdurch auch zu geringeren Kosten einer derartigen Inspektion führen. Insbesondere kann ein Vermessen des Fördergurtes sowie die Verwendung eines Fördergurtlaufplans, wie eingangs beschrieben, für die inspizierende Person entfallen.

Weist ein Fördergurt mehrere Gurtverbindungen auf, können vorzugsweise alle Gurtverbindungen durch jeweils wenigstens ein Markierungselement gekennzeichnet sein, wie zuvor beschrieben. Diese mehreren Markierungselemente können dabei gleich oder unterschiedlich ausgebildet sein, so dass ggfs. eine Unterscheidung einzelner oder aller Markierungselemente untereinander ermöglicht werden kann. Eine Gurtverbindung kann auch mehr als ein gleiches oder unterschiedliches Markierungselement aufweisen, um z.B. den Anfang und das Ende der Gurtverbindung in der länglichen Erstreckungsrichtung des Fördergurtes einzeln und separat zu markieren.

Vorteilhaft ist an einer derartigen Kennzeichnung auch, dass die Markierung der Gurtverbindung ein Alleinstellungsmerkmal des Fördergurtes gegenüber Produkten von Wettbewerbern darstellen kann. Entsprechend können die eigenen Fördergurte aufgrund der Art der Markierung wenigstens einer Gurtverbindung von den Fördergurten anderer Hersteller unterscheidbar sein. Auch können verschiedene Arten von Fördergurten desselben Herstellers aufgrund der Art der Markierung wenigstens einer Gurtverbindung untereinander unterscheidbar sein.

Vorteilhaft ist weiterhin, dass ein derartiges Markierungselement auch mittels entsprechender Sensorik z.B. von der Fördergurtanlage selbst erkannt werden kann. So kann der Fördergurt von der Fördergurtanlage selbsttätig verfahren und gleichzeitig mittels der Sensorik der entsprechende Abschnitt des Fördergurtes, wo sich das Markierungselement befindet, erfasst und ausgewertet werden. Dies kann zur Erkennung eines optischen Markierungselements z.B. mittels einer Bilderfassung und zur Erkennung eines elektronischen Markierungselements z.B. in Form eines RFID-Transponders z.B. mittels einer Sende-/Empfangseinheit erfolgen.

Wird nun ein Markierungselement von der Fördergurtanlage erkannt, kann die Bewegung des Fördergurtes von der Fördergurtanlage angehalten und die Inspektion der Gurtverbindung von einer Person vorgenommen werden. Dies kann ggfs. nacheinander für alle Gurtverbindungen des Fördergurtes wiederholt werden, falls mehrere Gurtverbindungen vorhanden sind. Dies kann der inspizierenden Person die Arbeit besonders erleichtern, da die Person an einer Stelle verbleiben und die zu inspizierende Gurtverbindung des Fördergurtes von der Fördergurtanlage der Person zugeführt werden kann.

Gemäß einem Aspekt der Erfindung ist das Markierungselement in der Querrichtung seitlich in dem Fördergurtkörper angeordnet. Mit anderen Worten wird in diesem Fall das Markierungselement in der Querrichtung seitlich von dem Fördergurtkörper bzw. von dessen Gurtverbindung aufgenommen. Das Markierungselement kann hierzu zwischen einer Oberseite und einer Unterseite des Fördergurtkörpers, welche die beiden Deckplatten des Fördergurtes bilden können, angeordnet und aufgenommen werden. Hierdurch kann vermieden werden, dass das Markierungselement in der Querrichtung seitlich über die Maße des Fördergurtes bzw. des Fördergurtkörpers hinausragt. Somit kann der Querschnitt des Fördergurtes wie in seinem übrigen Verlauf auch bei Verwendung des Markierungselements eingehalten werden.

Gemäß einem weiteren Aspekt der Erfindung ist das Markierungselement in der Querrichtung seitlich auf einer Seitenkante des Fördergurtkörpers angeordnet. Mit anderen Worten wird in diesem Fall das Markierungselement in der Querrichtung seitlich auf dem Fördergurtkörper bzw. auf dessen Gurtverbindung angeordnet. Das Markierungselement kann hierzu seitlich von außen auf den Fördergurtkörper bzw. auf dessen Gurtverbindung aufgebracht werden, so dass das Markierungselement seitlich über den Querschnitt des Fördergurtes hinausragen kann. In der Höhe kann das Markierungselement kürzer als die Dicke des Fördergurtkörpers oder gleich hoch wie die Dicke des Fördergurtkörpers, d.h. sich von der Oberseite bis zur Unterseite erstreckend, ausgebildet sein. Im ersteren Fall können Material und Aufwand reduziert werden, indem das Markierungselement zumindest in der Höhe vergleichsweise kurz ausgebildet wird. Im zweiteren Fall kann ein zumindest in der Höhe möglichst großes Markierungselement ausgebildet werden, was die Erkennbarkeit und insbesondere die optische Erkennbarkeit, insbesondere für die inspizierende Person, begünstigen kann. In jedem Fall kann dies die Aufbringung vereinfachen und bzw. oder die optische Erkennbarkeit des Markierungselements begünstigen.

In jedem Fall einer seitlichen Anbringung des Markierungselementes sowohl innerhalb des Fördergurtkörpers als auch auf dem Fördergurtkörper außen drauf kann vermieden werden, dass das Markierungselement z.B. durch das Fördergut von oben verdeckt werden kann. Auch kann vermieden werden, dass das Markierungselement durch einen Kontakt mit dem Fördergut und bzw. oder mit Teilen der Fördergurtanlage wie z.B. Umlenk-, Antriebs- und Laufrollen abgerieben oder auf andere Art und Weise beschädigt werden kann. Letzteres kann die Langlebigkeit des Markierungselements begünstigen. In jedem Fall kann die Erkennbarkeit bzw. die Detektierbarkeit des Markierungselements hierdurch begünstigt werden.

Vorteilhaft an einer seitlichen Anordnung der Kennzeichnung der Gurtverbindung ist, dass das Markierungselement, insbesondere als optisches Markierungselement, zusätzlich oder alternativ dazu verwendet werden kann, einen seitlichen Kontakt des Fördergurtes zumindest im Bereich der Gurtverbindung bzw. dessen Markierungselements mit Anlagenteilen der Fördergurtanlage zu erkennen. Werden nämlich bei der optischen Inspektion des Markierungselements Beschädigungen an dem Markierungselement festgestellt, so kann hierdurch auf eine schlechte Führung des Fördergurtes in der Fördergurtanlage geschlossen und dies korrigiert werden. Ggfs. können sogar aus der Art der Beschädigung Rückschlüsse auf die konkreten Ursachen der schlechten Führung gezogen und hierauf gezielt reagiert werden.

Vorteilhaft an einer seitlichen Anordnung der Kennzeichnung der Gurtverbindung ist ferner, dass das Markierungselement, insbesondere als optisches Markierungselement, von der inspizierenden Person von einer Position seitlich neben der Fördergurtanlage optisch erfasst werden kann, ohne hierzu den Fördergurt betreten und insbesondere auf dem Fördergurt entlanggehen zu müssen. Dies kann die Arbeitssicherheit für die inspizierende Person erhöhen.

Erfindungsgemäß weist das Markierungselement ein optisches Markierungselement auf. Mit anderen Worten ist das Markierungselement ausgebildet und angeordnet, insbesondere seitlich am Fördergurtkörper, so dass das Markierungselement von einer inspizierenden Person rein optisch und vorzugsweise direkt mit den Augen erkannt werden kann. Dies kann die Umsetzung der zuvor beschrieben Eigenschaften und Vorteile ohne jegliche Hilfsmittel ermöglichen, was den Aufwand und die Kosten zur Umsetzung der Erfindung besonders geringhalten kann.

Hierzu kann ein optisch von einer inspizierenden Person erkennbarer Unterschied des optischen Markierungselements gegenüber dem Untergrund des Fördergurtkörpers, auf welchem das optische Markierungselement angeordnet ist, genutzt werden, welcher z.B. durch eine Farbe, durch mehrere Farben, durch ein farbliches Muster und dergleichen bewirkt werden kann.

Auch kann die Oberfläche der Gurtverbindung als optisches Markierungselement strukturell entsprechend gestaltet sein, um bei der inspizierenden Person einen anderen optischen Eindruck als die Oberfläche des übrigen Fördergurtkörpers hervorzurufen. Dies kann z.B. durch die Kontur, durch Erhebungen und bzw. oder durch Vertiefungen, insbesondere als Muster, durch unterschiedliche Rauigkeiten und dergleichen erfolgen, welche den optischen Eindruck verändern und ggfs. zu anderen Lichtreflektionen führen können.

Gemäß einem weiteren Aspekt der Erfindung weist das optische Markierungselement eine Farbe auf, welche sich optisch von der Farbe des Fördergurtkörpers unterscheidet. Dies kann ein besonders einfaches, kostengünstiges und auch aus größerer Entfernung und bzw. oder mit geringerer Aufmerksamkeit von der inspizierenden Person erkennbares optisches Markierungselement darstellen.

Erfindungsgemäß weist das Markierungselement ein elektronisches Markierungselement, vorzugsweise einen RFID-Transponder, auf. Dies kann eine elektronische Erkennung der Gurtverbindung ermöglichen. Hierzu kann die inspizierende Person einen entsprechenden Detektor bzw. eine entsprechende Sende-/Empfangseinheit mit sich führen und bei der Inspektion des Fördergurtes auf den Fördergurt richten, um die mit dem elektronischen Markierungselement gekennzeichnete Gurtverbindung auffinden zu können. Dies kann zwar einen zusätzlichen technischen Aufwand bedeuten, jedoch das Auffinden der Gurtverbindung insbesondere bei schlechten Sichtverhältnissen wie z.B. bei Regen, bei Nebel, beim Auftreten von Staub und dergleichen sowie bei Nacht erleichtern und ggfs. überhaupt erst ermöglichen. Hierzu einen RFID-Transponder zu verwenden kann die Umsetzung begünstigen und insbesondere besonders kostengünstig werden lassen.

Erfindungsgemäß weist das Markierungselement ein Trägerelement auf, welches direkt auf der Gurtverbindung angeordnet ist, wobei das optische Markierungselement und bzw. oder das elektronische Markierungselement der Gurtverbindung abgewandt auf dem Trägerelement angeordnet ist bzw. sind. Mit anderen Worten wird das Trägerelement direkt auf der Oberfläche der Gurtverbindung bzw. des Fördergurtkörpers angeordnet. Mittels dieses Trägerelements des Markierungselements kann somit ein Untergrund auf dem Fördergurtkörper geschaffen werden, auf welchem das optische Markierungselement und bzw. oder das elektronische Markierungselement angeordnet werden kann bzw. können. Dies kann die Haltbarkeit des optischen Markierungselements und bzw. oder des elektronischen Markierungselements und hierdurch auch dessen bzw. deren Langlebigkeit verbessern. Das Trägerelement kann insbesondere eine Trägerschicht sein, welche durch Aufkleben oder direkt als fließ- bzw. streichfähiges aushärtbares bzw. trocknenbares Material auf die Oberfläche des Fördergurtkörpers aufgebracht werden kann. Dies kann die Anordnung vereinfachen und insbesondere flexibel halten.

Erfindungsgemäß ist das elektronische Markierungselement zwischen dem Trägerelement und dem optischen Markierungselement angeordnet. Hierdurch kann das elektronische Markierungselement nach außen hin von dem optischen Markierungselement abdeckt und somit vor äußeren Einflüssen wie insbesondere vor Feuchtigkeit, vor Staub, vor sonstigen Flüssigkeiten und dergleichen geschützt werden. Dies kann die Langlebigkeit des elektronischen Markierungselements begünstigen.

Gemäß einem weiteren Aspekt der Erfindung weist das Trägerelement eine schwarze Farbe auf. Dies kann insbesondere durch die Verwendung von Gummi als flexibles Material des Fördergurtkörper umgesetzt werden. Hierdurch kann ein Untergrund geschaffen werden, von dem sich ein optisches Markierungselement insbesondere in Form einer hellen und ggfs. grellen Farbe wie z.B. Gelb optisch deutlich absetzen kann. Dies kann die optische Erkennbarkeit des optischen Markierungselements insbesondere für die inspizierende Person begünstigen.

Gemäß einem weiteren Aspekt der Erfindung ist die Gurtverbindung vulkanisiert und das Markierungselement, vorzugsweise ein Trägerelement des Markierungselements, ist auf der vulkanisierten Gurtverbindung angeordnet. Dies kann die Kennzeichnung der Gurtverbindung in diesem Fall begünstigen.

Gemäß einem weiteren Aspekt der Erfindung ist in dem Fördergurtkörper eine Mehrzahl von Stahlseilen als Zugträger parallel zueinander angeordnet. Somit können Stahlseile als Zugträger verwendet und die hieraus resultierenden Eigenschaften und Vorteile genutzt werden.

Zwei Ausführungsbeispiele und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen Fördergurtes gemäß eines ersten Ausführungsbeispiels;
- Fig. 2: einen Querschnitt einer Detailansicht der Fig. 1;
- Fig. 3: eine perspektivische schematische Darstellung eines erfindungsgemäßen Fördergurtes gemäß eines zweiten Ausführungsbeispiels; und
- Fig. 4: einen Querschnitt einer Detailansicht der Fig. 3.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden.

Ein Fördergurt 1 weist einen Fördergurtkörper 10 mit einer in der Höhe Z nach oben hin ausgerichteten Oberseite 10a, zwei einander in der Querrichtung Y gegenüberliegenden Seitenkanten 10b und einer in der Höhe Z nach unten hin ausgerichteten und der Oberseite 10a direkt gegenüberliegenden Unterseite 10c auf. Der Fördergurtkörper 10 besteht im Wesentlichen aus einem flexiblen Material, welches als elastomeres Material aus Gummi ausgebildet ist. In dem flexiblen Material des Fördergurtkörpers 10 ist eine Mehrzahl von Zugträgern 11 als Stahlseile 11 eingebettet, welche sich in der Längsrichtung X als Bewegungsrichtung bzw. als Förderrichtung des Fördergurtes 1 erstrecken und parallel zueinander innerhalb einer gemeinsamen horizontalen Ebene angeordnet sind.

Der Fördergurt 1 ist mittels einer Gurtverbindung 12 endlos geschlossen, welche sich in der Längsrichtung X über eine gewisse Länge erstreckt und daher auch als Gurtverbindungsbereich 12 bezeichnet werden kann.

Erfindungsgemäß weist die Gurtverbindung 12 ein Markierungselement 13 auf, welches nach Herstellung der Gurtverbindung 12 in bzw. auf wenigstens eine der beiden Seitenkanten 10b der Gurtverbindung 12 ein- bzw. aufgebracht wurde, um die Gurtverbindung 12 vom übrigen Fördergurtkörper 10 einfacher, schneller und zuverlässiger als bisher bekannt unterscheiden zu können.

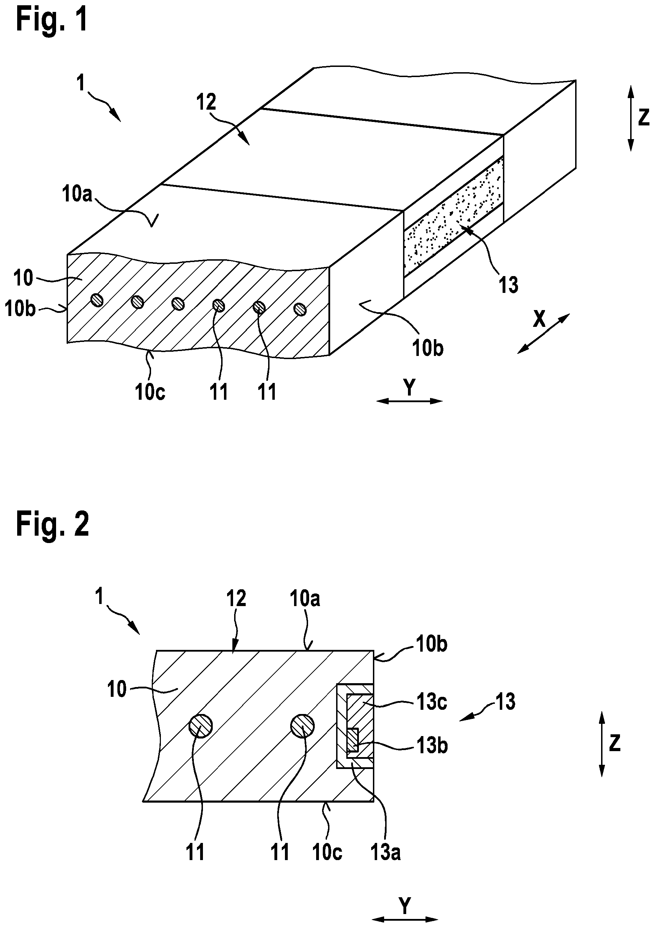

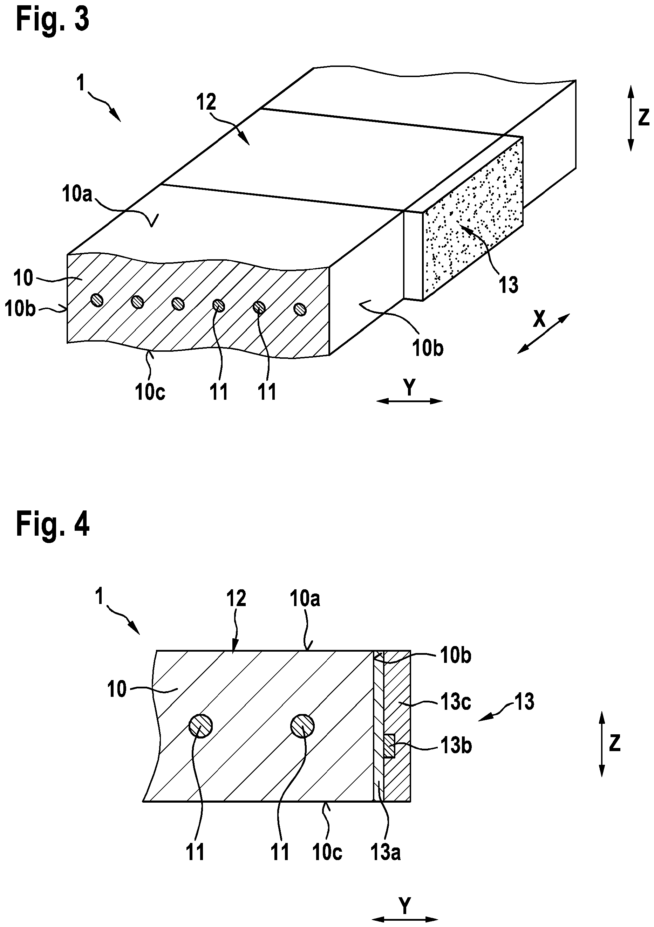

Gemäß eines ersten Ausführungsbeispiels wird das Markierungselement 13 hierzu in der Querrichtung Y seitlich von außen in eine entsprechende Aussparung des Fördergurtkörpers 10 im Bereich der Gurtverbindung 12 über dessen gesamte längliche Erstreckung in der der Längsrichtung X eingebracht, so dass das Markierungselement 13 in der Höhe Z von oben und von unten zwischen der Oberseite 10a und der Unterseite 10c des Fördergurtkörpers 10 angeordnet ist, siehe Figuren 1 und 2. Gemäß eines zweiten Ausführungsbeispiels wird das Markierungselement 13 hierzu in der Querrichtung Y seitlich auf den Fördergurtkörper 10 im Bereich der Gurtverbindung 12 über dessen gesamte längliche Erstreckung in der der Längsrichtung X aufgebracht, so dass sich das Markierungselement 13 in der Höhe Z ebenso weit erstreckt wie der Fördergurtkörper 10 selbst, siehe Figuren 3 und 4.

Das Markierungselement 13 weist in jedem Fall ein Trägerelement 13a in Form einer Trägerschicht 13a auf, welche als zähflüssiges Material von einer Person in die Aussparung des Fördergurtkörpers 10 eingebracht, siehe Figur 2, bzw. auf die Seitenkante 10b der Gurtverbindung 12 aufgetragen, siehe Figur 4, wurde und dort getrocknet ist. Hierdurch weist die Trägerschicht 13a einen stoffschlüssigen Halt auf dem Material der Gurtverbindung 12 auf. Das Material des Trägerschicht 13a ist derart gewählt, dass neben dem stoffschlüssigen Halt auch ein Schutz des Materials der Gurtverbindung 12 erreicht werden kann, weshalb die Trägerschicht 13a auch als Sperrschicht 13a bezeichnet werden kann. Bei Bedarf kann auf die Trägerschicht 13a jedoch auch verzichtet werden, was Material und Zeit sparen kann.

In die verbleibende Aussparung hinein, siehe Figur 2, bzw. auf die Trägerschicht 13a auf, siehe Figur 4, wurde anschließend von außen seitlich in der Querrichtung Y ein elektronisches Markierungselement 13b in Form eines RFID-Transponders 13b aufgeklebt. Die Trägerschicht 13a samt dem RFID-Transponder 13b wurde schließlich seitlich von einem optischen Markierungselement 13c in Form einer Farbschicht 13c abgedeckt, welche ebenfalls getrocknet wurde. Aufgrund der schwarzen Farbe des Gummis des Fördergurtkörpers 10 sowie der Gurtverbindung 12 weist die Farbschicht 13c eine gelbe Farbe als deutlichen Kontrast auf.

Auf diese Art und Weise kann die Gurtverbindung 12 von einer Person, welche die Gurtverbindung 12 auffinden und auf Beschädigungen und Abnutzungen inspizieren soll, vergleichsweise einfach, schnell und zuverlässig gefunden werden. Zum einen kann die Gurtverbindung 12 aufgrund des auffälligen Farbtons der Farbschicht 13c des Markierungselements 13 sowie aufgrund der seitlichen Ausrichtung des Markierungselements 13c von der Person im Vorbeigehen an dem Fördergurt 1 in einer Fördergurtanlage vergleichsweise einfach, schnell und zuverlässig auch aus einer gewissen Entfernung erkannt und gefunden werden. Zusätzlich oder alternativ kann die Person eine entsprechende Sende-/Empfangseinheit einsetzen, um den RFID-Transponder 13b zu erkennen und hierdurch die Gurtverbindung 12 vergleichsweise einfach, schnell und zuverlässig zu finden. Dies kann den Aufwand für die inspizierende Person in jedem Fall deutlich reduzieren und hierdurch entsprechende Kosten sparen.

Ferner kann die inspizierende Person aus Beschädigungen der Farbschicht 13c des Markierungselements 13 auf eine schlechte Führung des Fördergurtes 1 in der Fördergurtanlage schließen und diese korrigieren. Dies kann den Fördergurt 1 schonen und insbesondere vor Beschädigungen bewahren.

### Bezugszeichenliste (Teil der Beschreibung)

- X: Längsrichtung; Tiefe
- Y: Querrichtung; Breite
- Z: vertikale Richtung; Höhe

- 1: Fördergurt
- 10: Fördergurtkörper
- 10a: Oberseite des Fördergurtkörpers 10
- 10b: Seitenkanten des Fördergurtkörpers 10
- 10c: Unterseite des Fördergurtkörpers 10
- 11: Zugträger; Stahlseile
- 12: Gurtverbindung; Gurtverbindungsbereich
- 13: Markierungselement
- 13a: Trägerelement; Trägerschicht; Sperrschicht
- 13b: elektronisches Markierungselement; RFID-Transponder
- 13c: optisches Markierungselement; Farbschicht

## Patentansprüche

1. Fördergurt (1)
mit einem Fördergurtkörper (10), welcher mittels wenigstens einer Gurtverbindung (12) endlos geschlossen ist,
wobei genau die Gurtverbindung (12) wenigstens ein Markierungselement (13) aufweist,
wobei das Markierungselement (13) ein optisches Markierungselement (13c) aufweist,
**dadurch gekennzeichnet, dass** das Markierungselement (13) auch ein elektronisches Markierungselement (13b) aufweist,
wobei das Markierungselement (13) ein Trägerelement (13a) aufweist, welches direkt auf der Gurtverbindung (12) angeordnet ist,
wobei das optische Markierungselement (13c) und/oder das elektronische Markierungselement (13b) der Gurtverbindung (12) abgewandt auf dem Trägerelement (13a) angeordnet ist/sind,
wobei das elektronische Markierungselement (13c) zwischen dem Trägerelement (13a) und dem optischen Markierungselement (13c) angeordnet ist.

2. Fördergurt (1) nach Anspruch 1, **dadurch gekennzeichnet, dass** das Markierungselement (13) in der Querrichtung (Y) seitlich in dem Fördergurtkörper (10) angeordnet ist.

3. Fördergurt (1) nach Anspruch 1, **dadurch gekennzeichnet, dass** das Markierungselement (13) in der Querrichtung (Y) seitlich auf einer Seitenkante (10b) des Fördergurtkörpers (10) angeordnet ist.

4. Fördergurt (1) nach einem der vorangehenden Ansprüche, **dadurch gekennzeichnet, dass**
das optische Markierungselement (13c) eine Farbe aufweist, welche sich optisch von der Farbe des Fördergurtkörpers (10) unterscheidet.

5. Fördergurt (1) nach einem der vorangehenden Ansprüche, **dadurch gekennzeichnet, dass**
das Markierungselement (13) als elektronisches Markierungselement (13b) einen RFID-Transponder (13b) aufweist.

6. Fördergurt (1) nach einem der vorangehenden Ansprüche, **dadurch gekennzeichnet, dass**
das Trägerelement (13a) eine schwarze Farbe aufweist.

7. Fördergurt (1) nach einem der vorangehenden Ansprüche, **dadurch gekennzeichnet, dass**
die Gurtverbindung (12) vulkanisiert ist und
das Markierungselement (13), vorzugsweise ein Trägerelement (13a) des Markierungselements (13), auf der vulkanisierten Gurtverbindung (12) angeordnet ist.

8. Fördergurt (1) nach einem der vorangehenden Ansprüche, **dadurch gekennzeichnet, dass**
in dem Fördergurtkörper (10) eine Mehrzahl von Stahlseilen (11) als Zugträger (11) parallel zueinander angeordnet ist.

## Claims

1. Conveyor belt (1) having a conveyor belt body (10), which is closed in an endless form by means of at least one belt connection (12),
wherein specifically the belt connection (12) has at least one marking element (13),
wherein the marking element (13) has an optical marking element (13c), **characterized in that** the marking element (13) also has an electronic marking element (13b),
wherein the marking element (13) has a carrier element (13a), which is arranged directly on the belt connection (12),
wherein the optical marking element (13c) and/or the electronic marking element (13b) is/are arranged on the carrier element (13a) so as to face away from the belt connection (12),
wherein the electronic marking element (13c) is arranged between the carrier element (13a) and the optical marking element (13c).

2. Conveyor belt (1) according to Claim 1, **characterized in that**,
in the transverse direction (Y), the marking element (13) is arranged laterally in the conveyor belt body (10).

3. Conveyor belt (1) according to Claim 1, **characterized in that**,
in the transverse direction (Y), the marking element (13) is arranged laterally on a side edge (10b) of the conveyor belt body (10).

4. Conveyor belt (1) according to one of the preceding claims, **characterized in that**
the optical marking element (13c) has a colour which differs optically from the colour of the conveyor belt body (10).

5. Conveyor belt (1) according to one of the preceding claims, **characterized in that**
the marking element (13) has an RFID transponder (13b) as the electronic marking element (13b).

6. Conveyor belt (1) according to one of the preceding claims, **characterized in that**
the carrier element (13a) has a black colour.

7. Conveyor belt (1) according to one of the preceding claims, **characterized in that**
the belt connection (12) is vulcanized and
the marking element (13), preferably a carrier element (13a) of the marking element (13), is arranged on the vulcanized belt connection (12).

8. Conveyor belt (1) according to one of the preceding claims, **characterized in that**
a plurality of steel cables (11) are arranged parallel to one another in the conveyor belt body (10) as tension members (11).

## Revendications

1. Bande transporteuse (1) comprenant un corps de bande transporteuse (10) qui est fermé sans fin au moyen d'au moins une jonction de bande (12),
dans laquelle précisément la jonction de bande (12) présente au moins un élément de marquage (13),
l'élément de marquage (13) présentant un élément de marquage optique (13c), **caractérisée en ce que** l'élément de marquage (13) présente aussi un élément de marquage électronique (13b),
dans laquelle l'élément de marquage (13) présente un élément porteur (13a) qui est disposé directement sur la jonction de bande (12),
dans laquelle l'élément de marquage optique (13c) et/ou l'élément de marquage électronique (13b) sont disposés sur l'élément porteur (13a) en étant détournés de la jonction de bande (12),
dans laquelle l'élément de marquage électronique (13c) est disposé entre l'élément porteur (13a) et l'élément de marquage optique (13c).

2. Bande transporteuse (1) selon la revendication 1, **caractérisée en ce que** l'élément de marquage (13) est disposé dans le corps de bande transporteuse (10) latéralement dans la direction transversale (Y).

3. Bande transporteuse (1) selon la revendication 1, **caractérisée en ce que** l'élément de marquage (13) est disposé sur un bord latéral (10b) du corps de bande transporteuse (10) latéralement dans la direction transversale (Y).

4. Bande transporteuse (1) selon l'une quelconque des revendications précédentes, **caractérisée en ce que**
l'élément de marquage optique (13c) présente une couleur qui se distingue visuellement de la couleur du corps de bande transporteuse (10).

5. Bande transporteuse (1) selon l'une quelconque des revendications précédentes, **caractérisée en ce que**
l'élément de marquage (13) présente un transpondeur RFID (13b) comme élément de marquage électronique (13b).

6. Bande transporteuse (1) selon l'une quelconque des revendications précédentes, **caractérisée en ce que**
l'élément porteur (13a) est de couleur noire.

7. Bande transporteuse (1) selon l'une quelconque des revendications précédentes, **caractérisée en ce que**
la jonction de bande (12) est vulcanisée, et
l'élément de marquage (13), de préférence un élément porteur (13a) de l'élément de marquage (13), est disposé sur la jonction de bande (12) vulcanisée.

8. Bande transporteuse (1) selon l'une quelconque des revendications précédentes, **caractérisée en ce que**
une pluralité de câbles d'acier (11) est disposée en parallèle les uns aux autres en tant que supports de traction (11) dans le corps de barre transporteuse (10).
